# EUROPEAN PATENT APPLICATION

(11) **EP 4 332 128 A1**
(43) Date of publication of application: **06.03.2024**
(21) Application number: 22306312.4
(22) Date of filing: 05.09.2022
(51) Int. Cl.: C08F 14/22, C08F 261/06, C08L 27/16, C09D 127/16, C08L 29/04, C08F 2/20

(54) **VINYLIDENE FLUORIDE EMULSION POLYMERIZATION USING POLY(VINYL ALCOHOL) AS ONLY STABILIZER**

(71) Applicant: ARKEMA FRANCE, 92700 Colombes (FR); CENTRE NATIONAL DE LA RECHERCHE SCIENTIFIQUE, 75794 Paris Cedex 16 (FR); Université Claude Bernard Lyon I, 69622 Villeurbanne Cedex (FR); Ecole Supérieure de Chimie Physique Electronique de Lyon, 69616 Villeurbanne (FR)
(72) Inventor: EID, Nadim, PIERRE-BENITE (FR); DEVISME, Samuel, COLOMBES (FR); BONNET, Anthony, COLOMBES (FR); FEVRIER, Thibaut, COLOMBES (FR); LANSALOT, Muriel, GENAS (FR); D'AGOSTO, Franck, GENAS (FR)
(74) Representative: Arkema Patent

(57) **Abstract**

The present invention relates to a process for producing a stable PVDF latex by emulsion polymerization in the absence of fluorinated surfactant, said latex being stabilized by poly(vinyl alcohol) (PVOH).

## Description

### FIELD OF THE INVENTION

The present invention relates to a process for producing a stable PVDF latex by emulsion polymerization in the absence of fluorinated surfactant, said latex being stabilized by poly(vinyl alcohol) (PVOH).

### TECHNICAL BACKGROUND

Poly(vinylidene fluoride) (PVDF) is a fluoropolymer valued for its excellent mechanical and thermal properties, in addition to its outstanding chemical inertness. It has been used in high performance applications like lithium-ion batteries, coatings or water treatment. PVDF is synthesized via aqueous free-radical emulsion or suspension polymerization of vinylidene fluoride (VDF). As VDF is either a gas or a supercritical fluid depending on the polymerization conditions, VDF emulsion polymerization mechanism is more complex than most emulsion polymerization processes. In VDF emulsion polymerization, the recipe includes water, VDF, a surfactant, a water-soluble initiator and optionally some additives (chain transfer agent, buffer, anti-fouling agent). The polymerization takes place in a high-pressure reactor, where VDF is initially present in both the gas and aqueous phases, and in the PVDF particles formed during the polymerization.

To achieve a stable dispersion of PVDF particles and good polymer properties, a suitable surfactant must be used. Thus, different types of surfactants/stabilization techniques have been used industrially and/or depicted in the literature for VDF emulsion polymerization, such as molecular fluorinated surfactants, molecular non-fluorinated surfactants, or "surfactant-free" techniques.

Water-soluble polymers (WSPs) can industrially be used as stabilizers in emulsion polymerization. These polymers are able to provide a good colloidal stability by combination of adsorption to hydrophobic surfaces and grafting to the polymer (chemical bond linking the WSP to the particle).

Commonly used WSPs are hydroxyethylcellulose (paint industry) and poly(vinyl alcohol) (PVOH) (adhesives industry). The latter is particularly used as stabilizer for emulsion (co)polymerization of vinyl acetate to produce poly(vinyl acetate)-based latexes, and has the advantage to be readily biodegradable.

PVOH polymers are synthesized by partial hydrolysis of poly(vinyl acetate) (PVAc). Besides, their colloidal and interfacial properties are influenced by their degree of hydrolysis (DH) and their molecular characteristics, such as the molar mass, or the blockiness (characterized by sequences of vinyl acetate units within the hydrolyzed polymer chains). PVOH with a degree of hydrolysis between 70 and 90 mol% are well-known to aggregate in water by intra- and inter-molecular hydrophobic interactions of their vinyl acetate units. Due to their amphiphilic structure, they are able to stabilize hydrophobic particles in water by adsorption and/or grafting. Hydrophobic vinyl acetate units give strong adsorption on the hydrophobic particles, while hydrophilic hydroxyl units act as stabilizing moieties. Besides adsorption, grafting of PVOH onto the particles also takes place and relies on chain transfer to PVOH during the hydrophobic monomer polymerization.

The use of PVOH as suspending agent in VDF suspension polymerization is known. In the absence of suspending agent, reactor fouling may be observed.

US 2010298487 teaches the preparation of PVDF by polymerization in a dispersed aqueous medium. The aqueous suspension polymerization can be carried out in the presence of PVOH as dispersing agent.

It has now been found that stabilized PVDF particles can be obtained by a process of emulsion polymerization of VDF, using PVOH as sole stabilizer.

### SUMMARY OF THE INVENTION

According to a first aspect, the invention concerns a process for producing a stable PVDF latex by emulsion polymerization of VDF in the absence of a fluorinated surfactant or of a low molar mass surfactant, said process comprising the steps of:
i. charging a polymerization reactor with deionized water and a water-soluble surfactant,
ii. optionally adding a chain transfer agent,
iii. optionally adding a buffer,
iv. optionally adding a paraffin antifoulant,
v. raising the temperature to 50 to 120°C,
vi. feeding vinylidene fluoride to the reactor until the pressure reaches from 100 kPa to 10 MPa,
vii. adding an initiator to start the polymerization,
viii. continuously feeding vinylidene fluoride to maintain said pressure with optionally additional initiator,
ix. stopping the vinylidene fluoride feed when the desired amount of polymer conversion has been reached,
x. optionally continuing the initiator feed to consume the residual vinylidene fluoride,
characterized in that said water-soluble surfactant is a PVOH having a degree of hydrolysis ranging from 70 to 90 mol%.

This polymeric surfactant yields stable PVDF latexes while avoiding the need of using both fluorinated surfactants and low molar mass surfactants (typically with a molar mass lower than 500 g/mol).

The present invention makes it possible to overcome the disadvantages of the state of the art. It more particularly provides a process of emulsion polymerization of VDF, which allows to stabilize PVDF particles using PVOH as non-fluorinated surfactant. Also, the process according to the invention allows the preparation of high solid content PVDF latex (up to 60% by weight) using PVOH as thermally stable non fluorinated surfactant (degradation temperature above 250°C). Advantageously, the preparation of high solid content PVDF latex uses PVOH as a biodegradable non-fluorinated surfactant.

### DESCRIPTION OF EMBODIMENTS OF THE INVENTION

The invention is now described in detail.

According to a first aspect, the invention provides a VDF emulsion polymerization process for producing a stable PVDF latex (meaning that it contains PVDF particles that remain dispersed at the end of the polymerization) using PVOH as sole stabilizer, in the absence of a fluorinated surfactant or of a low molar mass surfactant.

PVOH is prepared by hydrolysis of PVAc and has the following formula (I):

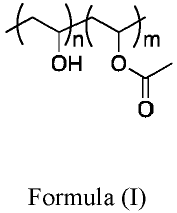

The degree of hydrolysis is defined as DH (%) = (n/(n+m))^{∗}100. n is the number of vinyl alcohol repetitive units and m is the number of vinyl acetate repetitive units in a PVOH chain. The ratio n/(n+m)^{∗}100 varies between 10 and 99 mol%, preferably between 50 and 95 mol%, more preferably between 70 and 90 mol%.

The Mw of the PVOH used in the invention is higher than 500 g/mol; preferably higher than 1000 g/mol, more preferably higher than 5000 g/mol.

The term "vinylidene fluoride polymer" used herein includes both normally solid, homopolymers and copolymers within its meaning. Such copolymers include those containing at least 50 mole percent of vinylidene fluoride copolymerized with at least one comonomer selected from the group consisting of tetrafluoroethylene, trifluoroethylene, chlorotrifluoroethylene, hexafluoropropene, vinyl fluoride, pentafluoropropene, perfluoromethyl vinyl ether, perfluoropropyl vinyl ether and any other monomer that would readily copolymerize with vinylidene fluoride. Terpolymers of vinylidene fluoride, hexafluoropropene and tetrafluoroethylene and terpolymers of vinylidene fluoride, trifluoroethylene and tetrafluoroethylene are also representatives of the class of vinylidene fluoride copolymers that can be prepared by the process embodied herein.

Although the process of the invention will be generally illustrated with respect to the polymerization of vinylidene fluoride homopolymer, one of skill in the art will recognize that analogous polymerization techniques can be applied to the preparation of copolymers of vinylidene fluoride with fluorinated or unfluorinated co-reactive monomers.

The polymers are made by an emulsion polymerization process.

In the emulsion polymerization process, the reactor is charged with deionized water, and optionally paraffin antifoulant and/or a chain-transfer agent.

The mixture is stirred and deoxygenated. A predetermined amount of chain transfer agent, CTA, is then introduced into the reactor, though no CTA might be used in the present process. The reactor temperature is raised to the desired level and VDF fed into the reactor. Once the initial charge of VDF is introduced and the pressure in the reactor has reached the desired level, at least one radical initiator is added to start and maintain the polymerization reaction. The VDF is continuously fed, optionally along with additional initiator to maintain the desired pressure. The temperature of the reaction can vary depending on the characteristics of the initiator used and one of skill in the art will know how to do so. Typically, the reactor temperature will be from 30°C to 120°C, preferably from 50° to 120°C. The polymerization pressure may vary, typically within the range of from 100 to 10000 kPa. Once the desired amount of polymer conversion has been reached in the reactor, the monomer feed will be stopped, but initiator is optionally added to consume the residual monomer. Residual gases (containing unreacted monomers) are then vented, and the latex recovered from the reactor. The polymer may then be isolated from the latex by standard methods, such as freeze thaw, spray-dry, freeze-dry, or high shear coagulation separation.

The reaction can be started and maintained by the addition of any suitable initiator known for the polymerization of fluorinated monomers including inorganic peroxides, "redox" combinations of oxidizing and reducing agents, and organic peroxides.

The radical initiator is added to the reaction mixture in an amount sufficient to initiate and maintain the polymerization reaction at a desired reaction rate. The order of addition may vary according to the desired process and latex emulsion characteristics.

The radical initiator may comprise a persulfate salt, such as sodium persulfate, potassium persulfate, or ammonium persulfate. The amount of persulfate salt added to the reaction mixture (based upon the total weight of monomer added to the reaction mixture) is from 0.005 to 1.0 weight percent.

The radical initiator may comprise an organic peroxide such as an alkyl, dialkyl, or diacyl peroxide, peroxydicarbonates, and peroxy esters in an amount from 0.5 to 2.5 weight percent on total monomer.

Chain transfer agents are optionally added to the polymerization to regulate the molecular weight of the product. They may be added to a polymerization in a single portion at the beginning of the reaction, or incrementally or continuously throughout the reaction. The amount and mode of addition of chain transfer agent depend on the activity of the particular chain-transfer agent employed, and on the desired molecular weight of the polymer product. When added, the amount of chain transfer agent is from 0.05 to 5 weight percent, preferably from 0.1 to 2 weight percent based on the total weight of monomer added to the reaction mixture.

Examples of chain transfer agents useful in the present invention include, but are not limited to oxygenated compounds such as alcohols, carbonates, ketones, esters, and ethers; halocarbons and hydrohalocarbons, such as chlorocarbons, hydrochlorocarbons, chlorofluorocarbons and hydrochlorofluorocarbons; ethane and propane.

The optional addition of a paraffin wax or hydrocarbon oil to the reaction serves as an antifouling agent to minimize or prevent polymer adhesions to the reactor components. Any long chain saturated hydrocarbon wax or oil can perform this function. The amount of oil or wax added to the reactor is an amount which serves to minimize the formation of polymer adhesions to the reactor components. The amount is generally proportional to the interior surface area of the reactor and may vary from 1 to 40 mg per square centimeter of reactor interior surface area. The amount of paraffin wax or hydrocarbon oil is preferably 5 mg/cm² of the reactor interior surface area.

Optionally, a buffer can be added to the reaction, such as sodium acetate.

Advantageously, no catalyst is used in the polymerization of VDF according to the invention.

The polymerization results in a latex generally having a solids level of 10 to 60 percent by weight, preferably 10 to 45 percent, and having a latex average particle size of less than 500 nm, preferably less than 400 nm, and more preferably less than 300 nm. The average particle size is generally at least 20 nm and preferably at least 50 nm.

According to an embodiment, the latex particles of vinylidene fluoride polymer have an average particle size comprised between 20 and 300 nm, as measured by dynamic light scattering (DLS).

A minor amount of one or more other water-miscible solvents, such as ethylene glycol, may be mixed into the latex to improve freeze-thaw stability.

The latex of VDF-containing polymer may be dried to a powder by means known in the art, such as, but not limited to, spray drying, freeze-drying, coagulating, and drum drying. The dried powder of VDF-containing polymer may have an average particle size of from 0.5 to 200 microns, or from 1 to 100 microns, or from 2 to 50 microns, or from 3 to 20 microns.

The latex of VDF-containing polymer is suitable for the preparation of coatings, films, membranes, and binders for battery applications.

### EXAMPLES

The following examples illustrate the invention without limiting it.

### Examples 1-3: VDF emulsion polymerization in the presence of PVOH

A commercial PVOH (*M*_{w} ≈ 31 000 g mol⁻¹, 86.7-88.7 mol% hydrolysis) was used as stabilizer using different experimental conditions.

Example 1: using 0.20 g of potassium persulfate (KPS), 0.12 g of sodium acetate, 0.06 g of PVOH, 100 mL of water.

Example 2: using 0.20 g of KPS, 0.12 g of sodium acetate, 0.08 g of PVOH, 100 mL of water.

Example 3: using 0.20 g of KPS, 0.12 g of sodium acetate, 0.13 g of PVOH, 100 mL of water.

The operating conditions as well as the characteristics of these experiments and of the obtained latexes are summarized in Table 1.

**Table 1**

| Ex | KPS/PVOH (wt ratio) | Time (h) | Solids content (%) | *D*_{z}^{a} (nm) | PdI^{b} | *M*ₙ^{c} (g mol⁻¹) | *Ð*^{c} |
|---|---|---|---|---|---|---|---|
| 1 | 3.3 | 1 | 23.0 | 235 | 0.04 | 97000 | 4.8 |
| 2 | 2.5 | 1 | 18.0 | 212 | 0.11 | 75000 | 6.4 |
| 3 | 1.5 | 1 | 14.0 | 149 | 0.09 | 62000 | 11.1 |

| | | | | | | | |
|---|---|---|---|---|---|---|---|
| ^{a} *D*_{z}: particle size measured by dynamic light scattering (DLS) ^{b} PdI: polydispersity index measured by dynamic light scattering (DLS) ^{c} *M*ₙ is the number-average molar mass and *Ð* is the dispersity. They are determined by size exclusion chromatography (SEC) in dimethyl sulfoxide (DMSO) using a calibration curve based on poly(methyl methacrylate) (PMMA) standards | | | | | | | |

In all cases, stable PVDF latexes were obtained after one hour of reaction with solids contents ranging from 14.0 to 23.0 % and with an average particle diameter comprised between 149 and 235 nm. The solids content decreases with the weight ratio KPS/PVOH, i.e. as the amount of PVOH increases. This may be explained by chain transfer reactions occurring along the PVOH chains during the polymerization, inducing inhibition and thus a lower solids content when the quantity of PVOH increases.

### Example 4: VDF emulsion polymerization in the presence of PVOH

A commercial PVOH (*M*_{w} ≈ 130 000 g mol⁻¹, 86.7-88.7 mol% hydrolysis) was used as stabilizer using 0.20 g of KPS, 0.12 g of sodium acetate, 0.08 g of PVOH, 100 mL of water.

The operating conditions as well as the characteristics of the experiment and of the obtained latex are summarized in Table 2.

**Table 2**

| Ex | KPS/PVOH (wt ratio) | Time (h) | Solids content (%) | *D*_{z} (nm) | PdI | *M*ₙ (g mol⁻¹) | *Ð* |
|---|---|---|---|---|---|---|---|
| 4 | 2.5 | 1 | 19.0 | 197 | 0.01 | 66000 | 7.8 |

A stable PVDF latex was obtained after one hour of reaction with isometric particles of 197 nm in diameter and 19 % solids content. The particle size and solids content after one hour of reaction are quite similar to those of Example 2 (same KPS/PVOH weight ratio), showing no significant impact of the molar mass of PVOH on the solids content and the particle size under these reaction conditions. However, the polydispersity index, the molar mass and the dispersity obtained in Example 4 are different from those obtained in Example 2.

### Examples 5-7: VDF emulsion polymerization in the presence of PVOH

A commercial PVOH (*M*_{w} ≈ 13 000-23 000 g mol⁻¹, 86.7-88.7 mol% hydrolysis) was used as stabilizer using different experimental conditions.

Example 5: using 0.20 g of KPS, 0.12 g of sodium acetate, 0.13 g of PVOH, 100 mL of water.

Example 6: using 0.20 g of KPS, 0.12 g of sodium acetate, 0.08 g of PVOH, 100 mL of water.

Example 7: using 0.20 g of KPS, 0.12 g of sodium acetate, 0.06 g of PVOH, 100 mL of water.

The operating conditions as well as the characteristics of the experiments and of the obtained latexes are summarized in Table 3.

**Table 3**

| Ex | KPS/PVOH (wt ratio) | Time (h) | Solids content (%) | *D*_{z} (nm) | PdI | *M*ₙ (g mol⁻¹) | *Ð* |
|---|---|---|---|---|---|---|---|
| 5 | 1.5 | 1 | 13.9 | 196 | 0.16 | 51000 | 8.3 |
| 6 | 2.5 | 1 | 19.5 | 220 | 0.04 | 69000 | 7.1 |
| 7 | 3.3 | 1 | 19.9 | 259 | 0.13 | 48000 | 9.4 |

In all cases, stable PVDF latexes were obtained after one hour of reaction. For the same quantity of KPS, the solids content decreases with the weight ratio KPS/PVOH for the reason mentioned above for Examples 1 to 3.

For the same PVOH mass and the same weight ratio KPS/PVOH, the solids content and the particle size after one hour of reaction are quite similar in Examples 2, 4 and 6, showing no significant impact of the molar mass of PVOH on PVDF stabilization under these reaction conditions.

### Example 8: VDF emulsion polymerization in the presence of PVOH

A commercial PVOH (0.08 g, *M*_{w} ≈ 9 000-10 000 g mol⁻¹, 80.0 mol% hydrolysis) was used as stabilizer using 0.20 g of KPS, 0.12 g of sodium acetate, 100 mL of water.

The operating conditions as well as the characteristics of the experiment and of the obtained latexes are summarized in Table 4.

**Table 4**

| Ex | KPS/PVOH (wt ratio) | Time (h) | Solids content (%) | *D*_{z} (nm) | PdI |
|---|---|---|---|---|---|
| 8 | 2.5 | 3.5 | 31.2 | 202 | 0.05 |

A stable PVDF latex was obtained after 3 h 30 of reaction with isometric particles of 202 nm in diameter and 31.2 % solids content. The particle size is quite similar to the one of Example 4, but the solids content is significantly higher, showing a good PVDF stabilization for Example 8.

### Example 9: VDF emulsion polymerization in the presence of PVOH

A commercial PVOH (0.08 g, *M*_{w} ≈ 31 000-51 000 g mol⁻¹, 98.0-98.8 mol% hydrolysis) was used as stabilizer using 0.20 g of KPS, 0.12 g of sodium acetate, 100 mL of water.

The operating conditions as well as the characteristics of the experiment and of the obtained latex are summarized in Table 5.

**Table 5**

| Ex | KPS/PVOH (wt ratio) | Time (h) | Solids content (%)^{∗} | *D*_{z} (nm)^{∗} | PdI^{∗} |
|---|---|---|---|---|---|
| 9 | 2.5 | 1 | 4.2 | 408 | 0.7 |

| | | | | | |
|---|---|---|---|---|---|
| ^{∗} determined on the stable fraction of the sample | | | | | |

After 1 h of reaction, the obtained product was mainly composed of coagulum, but a liquid and homogeneous fraction of the sample could however be collected and analyzed by gravimetry to measure the solids content and by DLS to measure the particle size.

For the same PVOH mass and the same weight ratio KPS/PVOH than in Examples 2, 4 and 6, no stable latex could be obtained when using this PVOH. This may indicate that the stabilization of PVDF particles depends more on the degree of hydrolysis of PVOH than on its molar mass.

### Comparative examples

### Examples 10-14: VDF emulsion polymerization in the presence of different stabilizers

The PVDF latexes obtained in the presence of PVOH have been compared to PVDF latexes obtained using other well-known stabilizers (Table 6). Example 4, which leads to particularly good results in term of latex stabilization, was selected for comparison.

**Table 6**

| Ex | Stabilizer | Solids content (%) | *D*_{z} (nm) | PdI |
|---|---|---|---|---|
| 4 | PVOH (a) | 19.0 | 197 | 0.04 |
| 10 | No stabilizer (a) | 15.3 | 257 | 0.01 |
| 11 | Capstone^{®} FS-17 (FS) (b) | 15.6 | 180 | 0.02 |
| 12 | PEG-OH (a), (c) | 9.5 | 206 | 0.02 |
| 13 | PEG-OH (c), (d) | 20.2 | 220 | 0.02 |
| 14 | PVOH (e) | 26.2 | 230 | 0.02 |

| | | | | |
|---|---|---|---|---|
| (a) Reactions conditions: 35 bar, 80 °C, 1 h of reaction, 0.20 g of KPS, 0.12 g of sodium acetate, 0.08 g of stabilizer, 100 mL of water (b) Reaction conditions: 35 bar, 80 °C, 1 h 30 of reaction, 0.0088 g of KPS, 0.0056 g of sodium acetate, 0.15 g of molecular surfactant Capstone^{®} FS-17, 100 mL of water (c) PEG-OH (*M*ₙ ≈ 2000 g mol⁻¹). Stabilizing properties for PVDF disclosed in WO2019063445. (d) Reactions conditions: 35 bar, 80 °C, 2 h 30 of reaction, 0.20 g of KPS, 0.12 g of sodium acetate, 0.08 g of stabilizer, 100 mL of water (e) Reactions conditions: 35 bar, 80 °C, 1 h 30 of reaction, 0.20 g of KPS, 0.12 g of sodium acetate, 0.08 g of stabilizer, 100 mL of water | | | | |

As shown in Table 6, after 1 h of reaction, the solids content obtained in presence of PVOH is significantly higher than the solids contents that can be reached without stabilizer (Example 10) or in the presence of PEG-OH (Example 12), and the particles are smaller in the presence of PVOH. This shows a better stabilization of PVDF particles in the presence of PVOH. Furthermore, no stable latex with solids contents higher than 15.3 % could be obtained in the absence of surfactant. A stable latex having a solids content of 20.2 % and an average particle size of 220 nm could be obtained in the presence of PEG-OH (Example 13) but only after 2 h 30 of reaction, and no higher solids content could be reached without coagulation in the presence of PEG-OH. A latex having a solids content of 26.2 % and an average particle size of 230 nm could be obtained without coagulation after 1 h 30 of reaction in the presence of PVOH (Example 14).

Finally, the latex obtained in the presence of PVOH (Example 4) was compared to the latex obtained in the presence of a molecular surfactant (FS), using a standard and reference formulation (Example 11). In the presence of the molecular surfactant, a stable latex having a solids content of 15.6 % and an average particle size of 180 nm (PdI = 0.02) was obtained after 1 h 30 of reaction. Thus, in these reaction conditions, the use of PVOH allows to reach higher solids contents in a shorter reaction time than in the presence of FS.

## Claims

1. A process for producing a stable poly(vinylidene fluoride) (PVDF) latex by emulsion polymerization of vinylidene fluoride (VDF) in the absence of a fluorinated surfactant or of a low molar mass surfactant, said process comprising the steps of:
i. charging a polymerization reactor with deionized water and a water-soluble surfactant,
ii. optionally adding a chain transfer agent,
iii. optionally adding a buffer,
iv. optionally adding a paraffin antifoulant,
v. raising the temperature to 50 to 120°C,
vi. feeding VDF to the reactor until the pressure reaches from 100 kPa to 10 MPa,
vii. adding an initiator to start the polymerization,
viii. continuously feeding VDF to maintain said pressure with optionally additional initiator,
ix. stopping the VDF feed when the desired amount of polymer conversion has been reached,
x. optionally continuing the initiator feed to consume the residual vinylidene fluoride,
**characterized in that** said water-soluble surfactant is a poly(vinyl alcohol) (PVOH) having a degree of hydrolysis ranging from 10 to 99 mol%, preferably between 50 and 95 mol%, more preferably between 70 and 90 mol%.

2. The process of claim 1, wherein the poly(vinyl alcohol) stabilizer has the following formula (I): 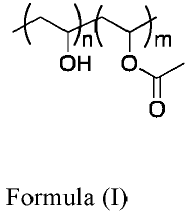 wherein n is the number of vinyl alcohol repetitive units and m is the number of vinyl acetate repetitive units in a PVOH chain.

3. The process of claim 1 or claim 2, wherein said initiator is a persulfate salt, chosen from sodium persulfate, potassium persulfate, or ammonium persulfate, the amount of persulfate salt added to the reaction mixture, based upon the total weight of monomer added to the reaction mixture, being from 0.005 to 1.0 weight percent.

4. The process of any of claims 1 to 3, wherein said initiator is an organic peroxide chosen from alkyl, dialkyl, or diacyl peroxide, peroxydicarbonates, and peroxy esters, and is used in an amount from about 0.5 to about 2.5 weight percent on total weight of monomer added to the reaction mixture.

5. The process of any of claims 1 to 4, wherein said chain transfer agents is selected from: oxygenated compounds such as alcohols, carbonates, ketones, esters, and ethers; halocarbons and hydrohalocarbons, such as chlorocarbons, hydrochlorocarbons, chlorofluorocarbons and hydrochlorofluorocarbons; ethane and propane, and is used in an amount from 0.05 to 5 weight percent, preferably from 0.1 to 2 weight percent based on the total weight of monomer added to the reaction mixture.

6. The process of any of claims 1 to 5, wherein said paraffin antifoulant is selected from long chain saturated hydrocarbon waxes and oils, and is used in an amount from 1 to 40 mg per square centimeter of reactor interior surface area.

7. The process of any of claims 1 to 6, wherein said a buffer is sodium acetate.

8. The process of any of claims 1 to 7, wherein said latex particles of vinylidene fluoride polymer have an average particle size comprised between 20 and 300 nm.

9. The process of any of claims 1 to 8, wherein said latex particles of vinylidene fluoride polymer have a solid content of 10 to 60, preferably of 15 to 45 weight percent.
